# EUROPÄISCHE PATENTSCHRIFT

(11) **EP 4 328 058 B1**
(45) Veröffentlichungstag und Bekanntmachung des Hinweises auf die Patenterteilung: **12.08.2026**
(21) Anmeldenummer: 23191828.5
(22) Anmeldetag: 17.08.2023
(51) Int. Cl.: B60K 7/00, B60K 17/04, F16H 57/021, F16H 1/06

(54) **RADSEITE**
WHEEL SIDE
CÔTÉ ROUE

(30) Priorität: 24.08.2022 DE 102022121430
(43) Veröffentlichungstag der Anmeldung: 28.02.2024
(73) Patentinhaber: Kessler & Co. GmbH & Co. KG, 73453 Abtsgmünd (DE)
(72) Erfinder: Bittlingmaier, Günter, 73432 Aalen (DE)
(74) Vertreter: Manitz Finsterwald Patent- und Rechtsanwaltspartnerschaft mbB

(56) Entgegenhaltungen:
- WO-A1-2021/192813
- DE-U1- 202017 005 181
- DE-U1- 29 518 401
- US-A1- 2008 035 399
- US-A1- 2020 062 224

## Beschreibung

Die Erfindung betrifft eine Radseite, bei der eine von einem Motor erzeugte und ausgegebene Antriebsleistung über eine Antriebswelle an ein Versatzgetriebe übertragen, mittels des Versatzgetriebes von einer Antriebsachse zu einer Abtriebsachse versetzt und anschließend über eine Abtriebswelle an eine Radnabe übertragen wird. Eine Radseite nach dem Oberbegriff des Anspruchs 1 ist aus US 2020/0062224 A1 bekannt.

Insbesondere wenn derartige Radseiten besonders kompakt ausgebildet sein sollen, können sich dabei Schwierigkeiten für die Lagerung der Antriebswelle und der Abtriebswelle bzw. damit verbundener Zahnräder des Versatzgetriebes ergeben.

Bei bekannten derartigen Radseiten ist es üblich, die Antriebswelle als Motorwelle innerhalb des Motors zu lagern, insbesondere an einem Gehäuse des Motors abzustützen, wobei ein mit der Antriebswelle verbundenes Antriebsrad des Versatzgetriebes dann über die Antriebswelle ebenfalls am Motor gelagert ist. Ein Beispiel hierfür ist die in DE 10 2010 001 750 A1 beschriebene Radseite. Durch eine solche Art der Antriebswellenlagerung wird jedoch die Lagerung des Motors zusätzlich und in ungleichmäßiger Weise belastet. Oftmals ist das Versatzgetriebe daher auf eine vergleichsweise spezielle Art ausgebildet, durch die vermieden werden soll, dass vom Versatzgetriebe aus zusätzliche Kräfte auf die Lagerung des Motors einwirken.

Beispielweise wird in DE 199 32 587 A1 eine Radseite beschrieben, deren Versatzgetriebe neben einem Antriebsrad und einem Abtriebsrad noch zusätzliche Zahnräder umfasst, wobei das Antriebsrad nicht nur direkt mit dem Abtriebsrad kämmt, sondern auch über die zusätzlichen Zahnräder antriebswirksam mit dem Abtriebsrad gekoppelt ist, so dass die eingehende Antriebsleistung über mehrere Pfade vom Antriebsrad zum Abtriebsrad gelangt. Die mit dem Antriebsrad unmittelbar kämmenden Zahnräder sind dabei derart angeordnet, dass sich die durch die Zahneingriffe auf das Antriebsrad wirkenden Radialkräfte gegenseitig aufheben und das Antriebsrad schwimmend gelagert sein kann. Um dies zu erreichen, muss das Versatzgetriebe, insbesondere im Vergleich zu einer einfachen Stirnradstufe, aber vergleichsweise komplex ausgebildet sein und eine vergleichsweise große Anzahl an Zahnrädern aufweisen.

Auch die Abtriebswellenlagerung kann einer kompakten Bauweise der Radseite entgegenstehen, da sie in der Regel zumindest zwei Lager umfasst, die in der Regel jeweils eigenen axialen Bauraum an der Abtriebswelle beanspruchen.

Es ist eine Aufgabe der Erfindung, eine Radseite bereitzustellen, deren Versatzgetriebe einen vergleichsweise einfachen Aufbau aufweisen kann und dabei gleichwohl zuverlässig gelagert ist, ohne dass die Lagerung einer, insbesondere axial, kompakten Bauweise der Radseite entgegensteht.

Die Aufgabe wird gelöst durch eine Radseite mit den Merkmalen des Anspruchs 1. Vorteilhafte Ausführungsformen der Erfindung ergeben sich aus den abhängigen Ansprüchen, der vorliegenden Beschreibung sowie den Figuren.

Die erfindungsgemäße Radseite umfasst: einen Motor zum Erzeugen einer Antriebsleistung, der einen Rotor und einen Stator umfasst; eine Radnabe; ein Versatzgetriebe, das ein zu einer Antriebsachse koaxiales Antriebsrad zum Empfangen der Antriebsleistung vom Motor und ein zu einer gegenüber der Antriebsachse versetzten Abtriebsachse koaxiales Abtriebsrad zum Ausgeben der Antriebsleistung an die Radnabe umfasst; eine Antriebswelle, die einerseits mit dem Rotor des Motors und andererseits mit dem Antriebsrad des Versatzgetriebes zu gemeinsamer Drehung verbunden ist; eine Abtriebswelle, die mit dem Abtriebsrad des Versatzgetriebes zu gemeinsamer Drehung verbunden ist und das Versatzgetriebe mit der Radnabe verbindet; und eine Abtriebswellenlagerung zur Lagerung der Abtriebswelle und des Abtriebsrads. Erfindungsgemäß ist dabei vorgesehen, dass die Abtriebswellenlagerung ein erstes Lager umfasst, das bezüglich der Abtriebsachse an einem Innenumfang der Abtriebswelle oder des Abtriebsrads angeordnet ist, um die Abtriebswelle und das Abtriebsrad radial nach innen abzustützen, und axial vollständig innerhalb der axialen Erstreckung einer Verzahnung des Abtriebsrads angeordnet ist.

Bei dem Motor kann es sich insbesondere um einen Elektromotor handeln. Wie üblich ist der Stator dabei stationär, wohingegen sich der Rotor im Betrieb des Motors dreht. Vorzugsweise ist der Rotor dabei koaxial zu der Antriebsachse, so dass der Rotor und das Antriebsrad des Versatzgetriebes über die Antriebswelle direkt miteinander verbunden sein können.

Das Versatzgetriebe ist vorzugsweise als einfache Stirnradstufe ausgebildet und weist somit zusätzlich zu dem Antriebsrad und dem Abtriebsrad keine weiteren Zahnräder auf. Vielmehr wird die vom Motor empfangene Antriebsleistung vom Antriebsrad vorzugsweise ausschließlich unmittelbar, insbesondere durch direkten Zahneingriff des Antriebsrads mit dem Abtriebsrad, auf das Abtriebsrad übertragen.

Durch die Übertragung der Antriebsleistung vom Antriebsrad auf das Abtriebsrad erfolgt ein Versatz von der Antriebsachse, entlang welcher die Antriebsleistung in das Versatzgetriebes eingeht, zur Abtriebsachse, entlang welcher die Antriebsleistung von dem Versatzgetriebe ausgegeben wird. Die Antriebsachse und die Abtriebsachse sind dabei vorzugsweise parallel zueinander. Grundsätzlich kommt jedoch auch eine gewinkelte Ausrichtung in Betracht.

Die vom Abtriebsrad ausgegebene Antriebsleistung muss nicht unbedingt unmittelbar an die Radnabe ausgegeben werden. Mit anderen Worten braucht die Abtriebswelle das Versatzgetriebe und die Radnabe nicht unmittelbar miteinander zu verbinden, sondern es können zwischen dem Versatzgetriebe und der Radnabe noch ein oder mehrere weitere funktionale Baugruppen vorgesehen sein. Insbesondere kann die Radseite ein Radnabengetriebe umfassen, über das die vom Versatzgetriebe ausgegebene Antriebsleistung zur Radnabe gelangt. Bei dem Radnabengetriebe, das vorzugsweise ein Untersetzungsgetriebe ist, kann es sich insbesondere um ein Planetengetriebe handeln.

Dadurch, dass die Antriebswelle einerseits mit dem Rotor des Motors und andererseits mit dem Antriebsrad des Versatzgetriebes zu gemeinsamer Drehung verbunden ist, ist sie dazu ausgebildet, die vom Motor erzeugte Antriebsleistung vom Motor zum Versatzgetriebe zu übertragen. Insbesondere kann die Antriebswelle dabei sowohl mit dem Motor als auch mit dem Antriebsrad jeweils unmittelbar verbunden sein.

Dass ein Element mit einem anderen Element zu gemeinsamer Drehung verbunden ist, meint dabei, dass die beiden Elemente derart, insbesondere unmittelbar, miteinander verbunden sind, dass sich bei Drehung des einen Elements auch das jeweiligen andere Element mit derselben Drehzahl ebenfalls dreht, wobei als ein Sonderfall einer solchen Verbindung die beiden Elemente einteilig miteinander ausgebildet sein können. Dies gilt nicht nur für die Antriebswelle und den Rotor bzw. das Antriebsrad, sondern auch für sonstige Bauteile der Radseite, die zu gemeinsamer Drehung miteinander verbunden sind, insbesondere auch für die Abtriebswelle, die mit dem Abtriebsrad des Versatzgetriebes zu gemeinsamer Drehung verbunden ist.

Die Abtriebswelle ist mit dem Abtriebsrad vorzugweise unmittelbar verbunden. Jedoch braucht die Abtriebswelle nicht unbedingt auch mit der Radnabe unmittelbar verbunden zu sein, um das Versatzgetriebe mit der Radnabe zu verbinden, sondern der Beitrag der Abtriebswelle zur Verbindung des Versatzgetriebes mit der Radnabe kann sich darauf beschränken, dass die Antriebsleistung vom Versatzgetriebe über die Abtriebswelle ausgegeben und von der Abtriebswelle in Richtung zur Radnabe weitergeleitet wird, so dass der der Leistungsfluss vom Versatzgetriebe zur Radnabe jedenfalls auch über die Abtriebswelle erfolgt, wobei aber zwischen der Abtriebswelle und der Radnabe weitere Komponenten der Radseite (zum Beispiel das genannte Radnabengetriebe) vorgesehen sein können, über die die Antriebsleistung von der Abtriebswelle zur Radseite weitergeleitet wird.

Zur Lagerung der Abtriebswelle und des Abtriebsrads ist die genannte Abtriebswellenlagerung vorgesehen, die alle diejenigen Lager umfasst, welche die Abtriebswelle und/oder das Abtriebsrad, insbesondere unmittelbar, an einem jeweiligen anderen Bauteil der Radseite abstützen. In entsprechender Weise umfasst die weiter unten erläuterte Antriebswellenlagerung alle diejenigen Lager, welche die Antriebswelle und/oder das Antriebsrad, insbesondere unmittelbar, an einem jeweiligen anderen Bauteil der Radseite abstützen. Die Abstützung kann dabei jeweils insbesondere an einer stationären Struktur der Radseite, wie etwa einem Gehäuse der Radseite oder einem Achsgehäuse einer die Radseite umfassenden Fahrzeugachse, erfolgen.

Vorteile hinsichtlich des für die Radseite erforderlichen Bauraums bei gleichwohl zuverlässiger Lagerung des Versatzgetriebes ergeben sich dabei insbesondere durch die besondere Anordnung des genannten ersten Lagers der Abtriebswellenlagerung. Die Bezeichnung dieses Lagers als "erstes Lager" dient dabei lediglich der begrifflichen Unterscheidung von weiteren Lagern und impliziert insbesondere nicht, dass die Abtriebswellenlagerung zusätzlich zu dem ersten Lager noch ein oder mehrere weitere Lager umfasst. Entsprechendes gilt auch für die weiter unten noch erwähnten weitere Lager mit ähnlichen Bezeichnungen.

Das erste Lager der Abtriebswellenlagerung ist erfindungsgemäß an einem Innenumfang der Abtriebswelle oder des Abtriebsrads angeordnet, so dass es die Abtriebswelle und das Abtriebsrad bezüglich der Abtriebsachse radial nach innen abstützt. Dieser Innenumfang kann insbesondere als radial nach innen weisende Mantelfläche ausgebildet sein, die sich um die Abtriebsachse herum erstreckt. Ein solcher Innenumfang kann beispielsweise dadurch vorliegen, dass die Abtriebswelle oder das Abtriebsrad einen Hohlwellenabschnitt aufweist. Das erste Lager kann dann bezüglich der Abtriebsachse radial innerhalb dieses Hohlwellenabschnitts angeordnet sein.

Die Anordnung des ersten Lagers an einem Innenumfang der Abtriebswelle oder des Abtriebsrads ermöglicht eine verschachtelte Lagerung des Abtriebsrads, die insbesondere in bezüglich der Abtriebsachse axialer Richtung vergleichsweise kompakt ausgebildet sein kann. Zu einer axial kompakten Bauweise trägt ferner bei, dass das erste Lager erfindungsgemäß axial vollständig innerhalb der axialen Erstreckung der Verzahnung des Abtriebsrads angeordnet ist. Mit anderen Worten befindet sich das erste Lager entlang der Abtriebsachse innerhalb eines Bereichs, dessen axiale Grenzen durch die axiale Erstreckung der Verzahnung des Abtriebsrads entlang der Abtriebsachse definiert werden. Insofern ist das erste Lager axial und radial innerhalb des Abtriebsrads angeordnet. Neben den Vorteilen hinsichtlich des Bauraums ergibt sich dadurch auch der Vorteil, dass das erste Lager im Wesentlichen keine Kippmomente aus der Übertragung der Antriebsleistung vom Antriebsrad auf das Abtriebsrad aufnehmen muss.

Da das Versatzgetriebe vorzugsweise als einfache Stirnradstufe ausgebildet ist, kämmt die genannte Verzahnung des Abtriebsrads vorzugweise unmittelbar mit einer Verzahnung des Antriebsrads des Versatzgetriebes. Das erste Lager befindet sich dabei bezüglich der Abtriebsachse radial innerhalb der Verzahnung und liegt axial in einer Ebene mit der Verzahnung des Antriebsrads und der Verzahnung des Abtriebsrads. Mit anderen Worten gibt es bei einer solchen Ausführungsform eine zur Abtriebsachse senkrechte Ebene, die sowohl das erste Lager als auch die beiden Verzahnungen des Antriebsrads und des Abtriebsrads schneidet.

Gemäß einer vorteilhaften Ausführungsform umfasst die Abtriebswellenlagerung ein zweites Lager, das bezüglich der Abtriebsachse an einem Außenumfang der Abtriebswelle oder des Abtriebsrads angeordnet ist, um die Abtriebswelle und das Abtriebsrad radial nach außen abzustützen, und das axial entlang der Abtriebsachse versetzt zu dem ersten Lager angeordnet ist, wodurch es entlang der Abtriebsachse eine andere Lage aufweist als das erste Lager. Der genannte Außenumfang kann insbesondere als bezüglich der Abtriebsachse radial nach außen weisende Mantelfläche ausgebildet sein, die sich um die Abtriebsachse herum erstreckt. Gemeinsam können das erste Lager und das zweite Lager der Abtriebswellenlagerung die Abtriebswelle und das Abtriebsrad besonders zuverlässig lagern.

Bevorzugt ist das zweite Lager bezüglich der Abtriebsachse axial auf der vom Motor weg weisenden Seite des Abtriebsrads angeordnet, so dass das Abtriebsrad bezüglich seiner Position entlang der Abtriebsachse zwischen dem zweiten Lager und dem Motor angeordnet ist. Dadurch wird der Motor weder durch das erste Lager noch durch das zweite Lager daran gehindert, für eine kompakte Ausbildung der Radseite axial besonders nah an dem Antriebsrad und dem Abtriebsrad des Versatzgetriebes angeordnet zu werden.

Gemäß einer vorteilhaften Weiterbildung der vorstehenden Ausführungsform ist der genannte Außenumfang, an dem das zweite Lager angeordnet ist, bezüglich der Abtriebsachse radial weiter innen, also näher an der Abtriebsachse, angeordnet als der genannte Innenumfang, an dem das erste Lager angeordnet ist. Mit anderen Worten weist der Außenumfang (d. h. die Lageraufnahme für das zweite Lager) einen geringeren Durchmesser auf als der Innenumfang (d. h. die Lageraufnahme für das erste Lager). Im Zusammenspiel mit dem ersten Lager wird dadurch eine besonders zuverlässige Lagerung insbesondere des Abtriebsrads erreicht. Dabei ist das zweite Lager vorzugsweise unmittelbar an dem Abtriebsrad oder bezüglich der Abtriebsachse axial unmittelbar an das Abtriebsrad angrenzend angeordnet. Das zweite Lager kann insofern in das Versatzgetriebe integriert sein, was insbesondere ermöglicht, das erste Lager und das zweite Lager der Abtriebswellenlagerung gemeinsam mit dem Zahneingriff zwischen den Verzahnungen des Antriebsrads und des Abtriebsrads, insbesondere innerhalb eines gemeinsamen Schmierraums und mit demselben Schmierstoff, zu schmieren.

Erfindungsgemäß umfasst die Radseite ferner eine Antriebswellenlagerung zur Lagerung der Antriebswelle und des Antriebsrads, die ein drittes Lager umfasst, das bezüglich der Antriebsachse axial vollständig innerhalb der axialen Erstreckung des Rotors des Motors angeordnet ist. Mit anderen Worten befindet sich das dritte Lager entlang der Antriebsachse innerhalb eines Bereichs, dessen axiale Grenzen durch die axiale Erstreckung des Rotors des Motors entlang der Antriebsachse definiert werden. Obwohl sich die Antriebswellenlagerung somit zumindest mit dem dritten Lager in den genannten Bereich innerhalb des Rotors des Motors erstreckt, muss das dritte Lager nicht unbedingt gegen eine Struktur, etwa ein Gehäuse, des Motors abgestützt sein. Vielmehr ist es bevorzugt, wenn sich gemeinsam mit dem dritten Lager eine von dem Motor separate, insbesondere stationäre, Struktur der Radseite, beispielsweise ein Gehäuse der Radseite oder ein Achsgehäuse einer die Radseite umfassenden Fahrzeugachse, mit einem Lagerungsabschnitt bis in den genannten Bereich erstreckt, so dass das dritte Lager an diesem Lagerungsabschnitt abgestützt sein kann. Insofern kann die Antriebswellenlagerung von dem Motor grundsätzlich unabhängig sein. Vielmehr kann vorteilhafter Weise sogar umgekehrt vorgesehen sein, dass der Rotor des Motors (indirekt über die Antriebswelle), insbesondere ausschließlich, durch die Antriebswellenlagerung gelagert ist.

Entsprechend wie weiter oben erläutert dient die Bezeichnung des Lagers als "drittes Lager" lediglich der begrifflichen Unterscheidung (beispielsweise von dem genannten ersten Lager und dem genannten zweiten Lager) und impliziert insbesondere nicht, dass die Antriebswellenlagerung zusätzlich zu dem dritten Lager ein oder mehrere weitere Lager umfasst.

Durch die genannte Anordnung des dritten Lagers innerhalb der axialen Erstreckung des Rotors des Motors steht auch das dritte Lager einer bezüglich der Antriebsachse axial besonders nahen Anordnung des Motors an dem Antriebsrad nicht entgegen. Auf diese Weise können also auch die Antriebswelle und das Antriebsrad zuverlässig gelagert und die Radseite gleichwohl axial besonders kompakt ausgebildet sein. Zudem erübrigt es sich dadurch, für das Versatzgetriebe eine komplexe und aufwändige Getriebeform zur Vermeidung einer übermäßigen Belastung des mit dem Antriebsrad verbundenen Motors vorzusehen.

Gemäß einer weiteren vorteilhaften Weiterbildung der vorstehenden Ausführungsform ist der Außendurchmesser des dritten Lagers größer als der Außendurchmesser des Antriebsrads. Dadurch wird ermöglicht oder zumindest vereinfacht, die Antriebswelle mit dem Antriebsrad und dem dritten Lager axial von derjenigen Seite der Radseite aus, an der der Motor vorgesehen ist, in Richtung zur Radnabe hin in das Versatzgetriebe einzubauen.

Erfindungsgemäß umfasst die Antriebswellenlagerung ein viertes Lager, wobei das dritte Lager und das vierte Lager bezüglich der Antriebsachse auf axial entgegengesetzten Seiten des Antriebsrads angeordnet sind. Mit anderen Worten befindet sich das vierte Lager auf der vom Motor weg weisenden Seite des Antriebsrads. Das Antriebsrad ist folglich entlang der Antriebsachse zwischen dem dritten Lager und dem vierten Lager angeordnet. Das dritte Lager und das vierte Lager können dabei insbesondere unmittelbar an der Antriebswelle vorgesehen sein und diese gegenüber, insbesondere stationären, Strukturen der Radseite abstützen.

Erfindungsgemäß ist der Außendurchmesser des vierten Lagers kleiner als der Außendurchmesser des Antriebsrads. Dadurch wird - insbesondere in Verbindung damit, dass (wie weiter oben beschrieben) der Außendurchmesser des dritten Lagers größer als der Außendurchmesser des Antriebsrads ist - ermöglicht oder zumindest vereinfacht, die Antriebswelle mit dem Antriebsrad, dem dritten Lager sowie dem vierten Lager axial von derjenigen Seite der Radseite aus, an der der Motor vorgesehen ist, in Richtung zur Radnabe hin in das Versatzgetriebe einzubauen.

Insbesondere aufgrund der jeweils beschriebenen Ausbildung kommt für die Antriebswellenlagerung und/oder für die Abtriebswellenlagerung jeweils eine Fest-Los-Lagerung in Betracht, für die Zylinder- und/oder Rillenkugellager verwendet werden können. Diese bieten gegenüber den ansonsten üblicherweise verwendeten Kegelrollenlagern einen besseren Wirkungsgrad, so dass sich ein weiterer Vorteil für die Radseite ergibt.

Die Erfindung bezieht sich auch auf eine Portalachse für ein Kraftfahrzeug, mit zwei Radseiten der erläuterten Art, die über eine Achsbrücke miteinander verbunden sind. Derartige Portalachsen kommen insbesondere bei Niederflur-Omnibussen, beispielsweise bei Nahverkehrs- und Stadtbussen, zum Einsatz, wobei ein möglichst großer Freiraum (hinsichtlich der vertikalen Tiefe und auch der horizontalen Breite) für die Passagiere erwünscht ist.

Die Erfindung wird im Folgenden lediglich beispielhaft anhand der Figuren weiter erläutert.
- Fig. 1: zeigt eine nicht beanspruchte Ausgestaltung einer Radseite in schematischer Darstellung.
- Fig. 2: zeigt eine Ausführungsform einer erfindungsgemäßen Radseite in schematischer Darstellung.

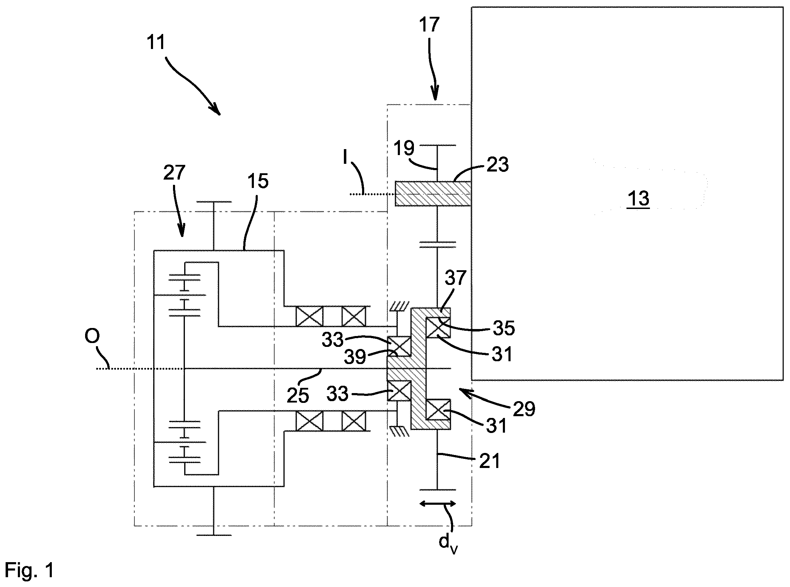

Die in Fig. 1 gezeigte Radseite 11 ist gemäß einer nicht beanspruchten Ausgestaltung ausgebildet und umfasst einen Motor 13 zum Erzeugen einer Antriebsleistung sowie eine Radnabe 15, die letztlich durch die vom Motor 13 erzeugte Antriebsleistung angetrieben wird. Dabei wird die Antriebsleistung vom Motor 13 als Drehung um eine Antriebsachse I ausgegeben, wohingegen die Radnabe 15 um eine Abtriebsachse O drehbar ist.

Um die Antriebsleistung von der Antriebsachse I zur Abtriebsachse O zu versetzen, umfasst die Radseite 11 ein Versatzgetriebe 17, das seinerseits ein zu der Antriebsachse I koaxiales Antriebsrad 19 sowie ein zu der Abtriebsachse O koaxiales Abtriebsrad 21 umfasst, die miteinander kämmen, so dass ihre Verzahnungen unmittelbar in Zahneingriff miteinander sind. Die Antriebsleistung wird dabei ausschließlich über diesen Zahneingriff vom Antriebsrad 19 auf das Abtriebsrad 21 übertragen. Das Versatzgetriebe 17 ist insofern als einfache Stirnradstufe ausgebildet.

Des Weiteren umfasst die Radseite 11 eine Antriebswelle 23 sowie eine Abtriebswelle 25. Die Antriebswelle 23 ist einerseits mit einem nicht dargestellten Rotor des Motors 13 und andererseits mit dem Antriebsrad 19 zu gemeinsamer Drehung verbunden. Dadurch überträgt die Antriebswelle 23 die vom Motor 13 erzeugte Antriebsleistung entlang der Antriebsachse I, entlang welcher sie sich erstreckt, zum Versatzgetriebe 17, nämlich auf das Antriebsrad 19. Vom Antriebsrad 19 wird die Antriebsleistung auf das Abtriebsrad 21 übertragen und somit zur Abtriebsachse O versetzt. Die Abtriebswelle 25, die sich entlang der Abtriebsachse O erstreckt, ist mit dem Abtriebsrad 21 zu gemeinsamer Drehung verbunden, so dass die Antriebsleistung vom Versatzgetriebe 17 über die Abtriebswelle 25 weiter in Richtung zur Radnabe 15 ausgegeben wird.

Zwischen dem Versatzgetriebe 17 und der Radnabe 15 ist noch ein Radnabengetriebe 27 vorgesehen, das als untersetzendes Planetengetriebe ausgebildet ist. Die Antriebsleistung wird daher von der Abtriebswelle 25 an das Radnabengetriebe 27 weitergeleitet, welches sie schließlich auf die Radnabe 15 überträgt.

Die Radseite 11 umfasst darüber hinaus eine Abtriebswellenlagerung 29, die sowohl der Lagerung des Abtriebsrads 21 als auch der Lagerung der Abtriebswelle 25 dient und zu diesem Zweck ein erstes Lager 31 und ein zweites Lager 33 umfasst. Über die Lager 31, 33 der Abtriebswellenlagerung 29 können das Abtriebsrad 21 und die Abtriebswelle 25 jeweils unmittelbar gelagert sein. Es kann aber auch vorgesehen sein, dass das Abtriebsrad 21 indirekt über die Abtriebswelle 25 oder die Abtriebswelle 25 indirekt über das Abtriebsrad 21 von den Lagern 31, 33 der Abtriebswellenlagerung 29 gelagert wird. Ferner können das Abtriebsrad 21 und die Abtriebswelle 25 auch einteilig ausgebildet sein.

Das erste Lager 31 der Abtriebswellenlagerung 29 ist bezüglich der Abtriebsachse O an einem Innenumfang 35 des Abtriebsrads 21 oder der Abtriebswelle 25 angeordnet, also an einer Fläche, die sich in Umfangsrichtung um die Abtriebsachse O herum erstreckt und dabei radial nach innen weisend ausgerichtet ist. Dadurch stützt das erste Lager das Abtriebsrad 21 und die Abtriebswelle 25 radial nach innen ab. Der genannte Innenumfang 35 wird durch einen Hohlwellenabschnitt 37 des Abtriebsrads 21 bzw. der Abtriebswelle 25 gebildet, innerhalb dessen das erste Lager 31 angeordnet ist. Das erste Lager 31 ist dabei bezüglich der Abtriebsachse O axial vollständig innerhalb der axialen Erstreckung dv der Verzahnung des Abtriebsrads 21 angeordnet. Dadurch kann das Versatzgetriebe 17 eine vergleichsweise geringe axiale Ausdehnung aufweisen.

Das zweite Lager 33 der Abtriebswellenlagerung 29 ist bezüglich der Abtriebsachse O an einem Außenumfang 39 des Abtriebsrads 21 oder der Abtriebswelle 25 angeordnet und stützt das Abtriebsrad 21 und die Abtriebswelle 25 radial nach außen ab. Das zweite Lager 33 ist dabei auf der von dem Motor 13 weg weisenden Seite des Abtriebsrads 21 axial unmittelbar an das Abtriebsrad 21 angrenzend angeordnet. Ferner weist die durch den Außenumfang 39 gebildete Lageraufnahme für das zweite Lager 33 einen geringeren Durchmesser auf als die durch den Innenumfang 35 gebildete Lageraufnahme für das erste Lager 31.

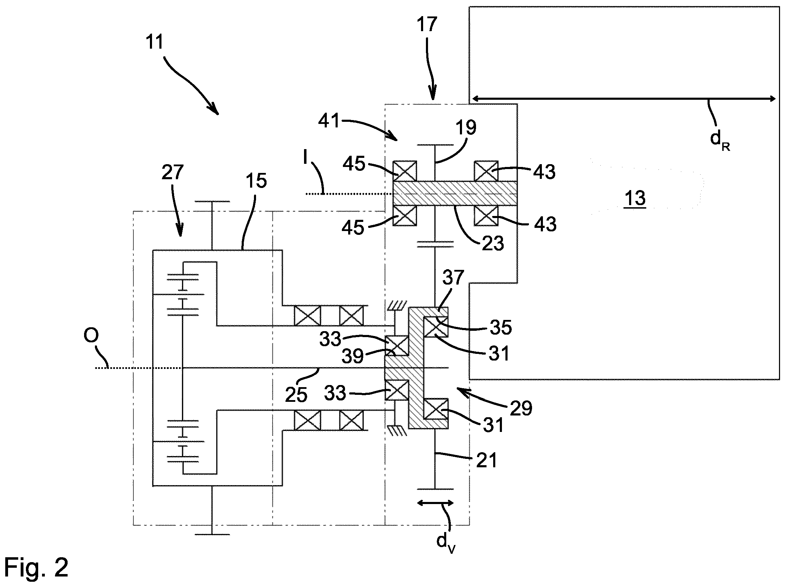

Die in Fig. 2 gezeigte Ausführungsform einer erfindungsgemäßen Radseite 11 unterscheidet sich von der in Fig. 1 gezeigten nicht beanspruchten Ausgestaltung durch die Art, in der das Antriebsrad 19 und die Antriebswelle 23 gelagert sind. Da die erste Ausführungsform und die zweite Ausführungsform ansonsten zumindest im Wesentlichen übereinstimmen, werden in Fig. 2 dieselben Bezugszeichen wie in Fig. 1 verwendet und die mit Bezug auf Fig. 1 bereits erläuterten Elemente der jeweiligen Radseite 11 nicht erneut beschrieben.

Bei der in Fig. 2 gezeigten Ausführungsform umfasst die Radseite 11 eine Antriebswellenlagerung 41, die zur Lagerung des Antriebsrads 19 und der Antriebswelle 23 zwei Lager umfasst, welche zur Unterscheidung von den Lagern der Abtriebswellenlagerung 29 als drittes Lager 43 und viertes Lager 45 bezeichnet werden. Über die Lager 43, 45 der Antriebswellenlagerung 41 können das Antriebsrad 19 und die Antriebswelle 23 jeweils unmittelbar gelagert sein. Es kann aber auch vorgesehen sein, dass das Antriebsrad 19 indirekt über die Antriebswelle 23 oder die Antriebswelle 23 indirekt über das Antriebsrad 19 von den Lagern 43, 45 der Antriebswellenlagerung 41 gelagert wird. Ferner können das Antriebsrad 19 und die Antriebswelle 23 auch einteilig ausgebildet sein.

Das dritte Lager 43 und das vierte Lager 45 sind auf axial entgegengesetzten Seiten des Antriebsrads 19 angeordnet, wobei das dritte Lager 43 bezüglich der Antriebsachse I axial vollständig innerhalb der axialen Erstreckung d_{R} des in den Figuren nicht gezeigten Rotors des Motors 13 angeordnet ist. Dadurch kann eine besonders zuverlässige Antriebswellenlagerung 41 erreicht werden, ohne dass das motorseitige dritte Lager 43 zusätzlichen axialen Bauraum beanspruchen und dadurch eine bezüglich der Antriebsachse I axial eng benachbarte Anordnung des Motors 13 an dem Antriebsrad 19 des Versatzgetriebes 17 behindern würde.

### Bezugszeichen

- 11: Radseite
- 13: Motor
- 15: Radnabe
- 17: Versatzgetriebe
- 19: Antriebsrad
- 21: Abtriebsrad
- 23: Antriebswelle
- 25: Abtriebswelle
- 27: Radnabengetriebe
- 29: Abtriebswellenlagerung
- 31: erstes Lager
- 33: zweites Lager
- 35: Innenumfang
- 37: Hohlwellenabschnitt
- 39: Außenumfang
- 41: Antriebswellenlagerung
- 43: drittes Lager
- 45: viertes Lager
- d_{R}: axiale Erstreckung des Rotors
- dv: axiale Erstreckung der Verzahnung
- I: Antriebsachse
- O: Abtriebsachse

## Patentansprüche

1. Radseite (11) umfassend:
- einen Motor (13) zum Erzeugen einer Antriebsleistung, der einen Rotor und einen Stator umfasst,
- eine Radnabe (15),
- ein Versatzgetriebe (17), das ein zu einer Antriebsachse (I) koaxiales Antriebsrad (19) zum Empfangen der Antriebsleistung vom Motor (13) und ein zu einer gegenüber der Antriebsachse (I) versetzten Abtriebsachse (O) koaxiales Abtriebsrad (21) zum Ausgeben der Antriebsleistung an die Radnabe (15) umfasst,
- eine Antriebswelle (23), die einerseits mit dem Rotor des Motors (13) und andererseits mit dem Antriebsrad (19) des Versatzgetriebes (17) zu gemeinsamer Drehung verbunden ist,
- eine Abtriebswelle (25), die mit dem Abtriebsrad (21) des Versatzgetriebes (17) zu gemeinsamer Drehung verbunden ist und das Versatzgetriebe (17) mit der Radnabe (15) verbindet, und
- eine Abtriebswellenlagerung (29) zur Lagerung der Abtriebswelle (25) und des Abtriebsrads (21), die ein erstes Lager (31) umfasst, das bezüglich der Abtriebsachse (O) an einem Innenumfang (35) der Abtriebswelle (25) oder des Abtriebsrads (21) angeordnet ist, um die Abtriebswelle (25) und das Abtriebsrad (21) radial nach innen abzustützen, und axial vollständig innerhalb der axialen Erstreckung (dv) einer Verzahnung des Abtriebsrads (21) angeordnet ist, und
- eine Antriebswellenlagerung (41) zur Lagerung der Antriebswelle (23) und des Antriebsrads (19), die ein drittes Lager (43) und ein viertes Lager (45) umfasst, die bezüglich der Antriebsachse (I) auf axial entgegengesetzten Seiten des Antriebsrads (19) angeordnet sind;
**dadurch gekennzeichnet,**
**dass** das dritte Lager (43) bezüglich der Antriebsachse (I) axial vollständig innerhalb der axialen Erstreckung (d_{R}) des Rotors des Motors (13) angeordnet ist, und
**dass** der Außendurchmesser des vierten Lagers (45) kleiner als der Außendurchmesser des Antriebsrads (19) ist.

2. Radseite nach Anspruch 1,
wobei die Abtriebswellenlagerung (29) ein zweites Lager (33) umfasst, das bezüglich der Abtriebsachse (O) an einem Außenumfang (39) der Abtriebswelle (25) oder des Abtriebsrads (21) angeordnet ist, um die Abtriebswelle (25) und das Abtriebsrad (21) radial nach außen abzustützen, und axial entlang der Abtriebsachse (O) versetzt zu dem ersten Lager (31) angeordnet ist.

3. Radseite nach Anspruch 2,
wobei der Außenumfang (39), an dem das zweite Lager (33) angeordnet ist, bezüglich der Abtriebsachse (O) radial weiter innen angeordnet ist als der Innenumfang (35), an dem das erste Lager (31) angeordnet ist.

4. Radseite nach einem der vorstehenden Ansprüche,
wobei der Außendurchmesser des dritten Lagers (43) größer als der Außendurchmesser des Antriebsrads (19) ist.

5. Portalachse mit zwei Radseiten (11) nach einem der vorstehenden Ansprüche, die über eine Achsbrücke miteinander verbunden sind.

## Claims

1. A wheel side (11) comprising:
- a motor (13) for generating a drive power that comprises a rotor and a stator,
- a wheel hub (15),
- an offset gear (17) that comprises a drive gear (19), which is coaxial to a drive axis (I), for receiving the drive power from the motor (13) and a driven gear (21), which is coaxial to an output axis (O) offset with respect to the drive axis (I), for outputting the drive power to the wheel hub (15),
- a drive shaft (23) which is connected, on the one hand, to the rotor of the motor (13) and, on the other hand, to the drive gear (19) of the offset gear (17) for a joint rotation,
- a driven shaft (25) which is connected to the driven gear (21) of the offset gear (17) for a joint rotation and which connects the offset gear (17) to the wheel hub (15), and
- a driven shaft support (29) for supporting the driven shaft (25) and the driven gear (21), said driven shaft support (29) comprising a first bearing (31), which is arranged with respect to the output axis (O) at an inner circumference (35) of the driven shaft (25) or the driven gear (21) to support the driven shaft (25) and the driven gear (21) radially inwardly, and being arranged axially completely within the axial extent (d_{V}) of a toothing of the driven gear (21), and
- a drive shaft support (41) for supporting the drive shaft (23) and the drive gear (19), said drive shaft support (41) comprising a third bearing (43) and a fourth bearing (45) that are arranged at axially opposite sides of the drive gear (19) with respect to the drive axis (I),
**characterized in that**
the third bearing (43) is arranged, with respect to the drive axis (I), axially completely within the axial extent (d_{R}) of the rotor of the motor (13), and
**in that** the outer diameter of the fourth bearing (45) is smaller than the outer diameter of the drive gear (19).

2. A wheel side according to claim 1,
wherein the driven shaft support (29) comprises a second bearing (33) which is arranged with respect to the output axis (O) at an outer circumference (39) of the driven shaft (25) or the driven gear (21) to radially outwardly support the driven shaft (25) and the driven gear (21) and which is arranged offset from the first bearing (31) axially along the output axis (O).

3. A wheel side according to claim 2,
wherein the outer circumference (39) at which the second bearing (33) is arranged is arranged radially further inwardly with respect to the output axis (O) than the inner circumference (35) at which the first bearing (31) is arranged.

4. A wheel side according to any one of the preceding claims,
wherein the outer diameter of the third bearing (43) is greater than the outer diameter of the drive gear (19).

5. A portal axle comprising two wheel sides (11) according to any one of the preceding claims that are connected to one another via an axle bridge.

## Revendications

1. Côté roue (11) comprenant :
- un moteur (13) destiné à générer une puissance d'entraînement, qui comprend un rotor et un stator,
- un moyeu de roue (15),
- un engrenage à décalage (17) comprenant une roue d'entraînement (19) coaxiale à un axe d'entraînement (I) pour recevoir la puissance d'entraînement du moteur (13) et une roue de sortie (21) coaxiale à un axe de sortie (O) décalé par rapport à l'axe d'entraînement (I) pour transmettre la puissance d'entraînement au moyeu de roue (15),
- un arbre d'entraînement (23) relié, d'une part, au rotor du moteur (13) et, d'autre part, à la roue d'entraînement (19) de l'engrenage à décalage (17) pour tourner conjointement avec celle-ci,
- un arbre de sortie (25) relié à la roue de sortie (21) de l'engrenage à décalage (17) pour tourner conjointement avec celle-ci et reliant l'engrenage à décalage (17) au moyeu de roue (15), et
- un palier d'arbre de sortie (29) destiné à supporter l'arbre de sortie (25) et la roue de sortie (21), qui comprend un premier palier (31) disposé, par rapport à l'axe de sortie (O), sur une circonférence intérieure (35) de l'arbre de sortie (25) ou de la roue de sortie (21), afin de soutenir l'arbre de sortie (25) et la roue de sortie (21) radialement vers l'intérieur, et qui est disposé axialement entièrement à l'intérieur de l'étendue axiale (d_{V}) d'une denture de la roue de sortie (21), et
- un palier d'arbre d'entraînement (41) destiné à supporter l'arbre d'entraînement (23) et la roue d'entraînement (19), qui comprend un troisième palier (43) et un quatrième palier (45) disposés, par rapport à l'axe d'entraînement (I), sur des côtés axialement opposés de la roue d'entraînement (19) ;
**caractérisé en ce**
**que** le troisième palier (43) est disposé, par rapport à l'axe d'entraînement (I), entièrement à l'intérieur de l'étendue axiale (d_{R}) du rotor du moteur (13), et
en ce que le diamètre extérieur du quatrième palier (45) est inférieur au diamètre extérieur de la roue d'entraînement (19).

2. Côté roue selon la revendication 1,
le palier de l'arbre de sortie (29) comprenant un deuxième palier (33) qui est disposé, par rapport à l'axe de sortie (O) sur une périphérie extérieure (39) de l'arbre de sortie (25) ou de la roue de sortie (21), afin de soutenir radialement vers l'extérieur l'arbre de sortie (25) et la roue de sortie (21), et est décalé axialement le long de l'axe de sortie (O) par rapport au premier palier (31).

3. Côté roue selon la revendication 2,
dans lequel la circonférence extérieure (39) sur laquelle est disposé le deuxième palier (33) est située plus à l'intérieur dans le sens radial par rapport à l'axe de sortie (O) que la circonférence intérieure (35) sur laquelle est disposé le premier palier (31).

4. Côté roue selon l'une des revendications précédentes,
dans lequel le diamètre extérieur du troisième palier (43) est supérieur au diamètre extérieur de la roue d'entraînement (19).

5. Essieu portique comportant deux côtés de roue (11) selon l'une des revendications précédentes, qui sont reliés entre eux par un pont d'essieu.
